# EUROPÄISCHE PATENTSCHRIFT

(11) **EP 1 222 391 B1**
(45) Veröffentlichungstag und Bekanntmachung des Hinweises auf die Patenterteilung: **19.01.2011**
(21) Anmeldenummer: 00954444.6
(22) Anmeldetag: 07.07.2000
(51) Int. Cl.: F03D 11/00, F03D 7/04

(54) **VERFAHREN ZUR ÜBERWACHUNG VON WINDENERGIEANLAGEN**
METHOD FOR MONITORING WIND POWER PLANTS
PROCEDE DE SURVEILLANCE D'EOLIENNES

(30) Priorität: 06.10.1999 DE 19948194
(43) Veröffentlichungstag der Anmeldung: 17.07.2002
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2000/006433
(87) Internationale Veröffentlichungsnummer: WO 2001/025631

(56) Entgegenhaltungen:
- EP-A1- 0 465 696
- WO-A1-81/03702
- WO-A1-99/36695
- US-A- 4 423 634
- US-A- 5 210 704
- US-A- 5 845 230

## Beschreibung

Die Erfindung betrifft ein Verfahren zur Überwachung von Windenergieanlagen, wobei insbesondere eine akustische Überwachung durchgeführt wird.

Für eine effektive Nutzung von Windenergieanlagen ist es vorteilhaft, die Regelung und die Betriebsführung einer Windenergieanlage derart auszuführen, daß ein vollautomatischer Betrieb der Anlage sichergestellt ist. Jede andere Verfahrensweise, die ein manuelles Eingreifen im normalen Betriebsverlauf erfordert, ist aus wirtschaftlichen Überlegungen unakzeptabel. Zur weiteren Steigerung der Wirtschaftlichkeit der Anlage sollte die Regelung derart erfolgen, daß in jedem Betriebszustand ein möglichst hoher Energiewandlungsgrad erzielt wird. Ein weiterer wichtiger Aspekt bei der Regelung und bei der Betriebsführung einer Windenergieanlage ist die Betriebssicherheit. Technische Störungen und umweltbedingte Gefahrenzustände müssen erkannt und die vorhandenen Sicherheitsschaltungen ausgelöst werden. Ferner kann ein Regelungssystem zur Verminderung der mechanischen Belastung der Windenergieanlage beitragen.

Bei der Überwachung von Windenergieanlagen ist es ebenfalls wünschenswert, daß eine Fernanalyse durchgeführt werden kann. Dies hat den Vorteil, daß die Erfassung der jeweiligen Betriebsdaten zentral erfolgen kann. Eine derartige Femüberwachung kann zu einer Erhöhung der Wirtschaftlichkeit der Anlage sowie zu einer Erhöhung der durchschnittlichen Verfügbarkeit der Anlage führen. Dabei werden beispielsweise die Betriebsdaten von einer Service-Zentrale bzw. einer Fernüberwachungszentrale abgefragt und analysiert. Durch eine Analyse der eingegangenen Parameter können zum einen auftretende Probleme frühzeitig erkannt werden und zum anderen können die Betriebsdaten wichtige Hinweise auf die Ertrags- und Winddaten für die Entwicklungsabteilung liefern. Eine Analyse dieser Daten durch die Entwicklungsabteilung kann zu Verbesserungen an der Windernergieanlage führen.

Bei einer bekannten Windenergieanlage werden beispielsweise regelmäßig folgende Parameter sensorisch überwacht: Windgeschwindigkeit, Windrichtung, Luftdichte, Drehzahl pro Minute (Mittel- und Extremwerte), Temperaturen, Ströme, Spannungen, Schaltpuls, Blitzeinschläge (Ereigniszähler), etc.

Eine Analyse der eingegangen Parameter durch die Fernüberwachungszentrale kann zu einer Verbesserung des Vorort-Services führen, da die Fernüberwachungszentrale dem Vorort-Service genaue Hinweise bezüglich der Fehlerquellen geben kann.

Aus der WO81/03702 sind ein analytisches Untersuchungsverfahren und eine Einrichtung zum selbsttätigen Überwachen des Zustandes von Maschinen oder Anlagen während des Betriebes auf der Grundlage der Analyse des Spektrums von Schall- bzw. Erschütterungsschwingungen bekannt, wobei Schwingungen aufgenommen und analysiert werden.

Aus der US 5,845,230 ist eine Femüberwachungsanlage bekannt, zu der Schwingungsdaten einer rotierenden Maschine übermittelt werden.

Aus der DE 19 545 008 A1 ist ein Verfahren und eine Vorrichtung zur Überwachung von Maschinen bekannt. Demnach werden periodisch arbeitende Maschinen überwacht, indem charakteristische Messwerte der zu beobachtenden Maschine beispielweise mittels einer Fourieranalyse analysiert und maschinell ausgewertet werden.

Zur weiteren Verbesserung der Wartung, der Sicherheit und der Wirtschaftlichkeit einer Windenergieanlage ist es wünschenswert, weitere Parameter der Windenergieanlage zu überwachen. Der Erfindung liegt daher das Problem zugrunde, eine Überwachung von Windenergieanlagen zu verbessern.

Dieses Problem wird erfindungsgemäß durch eine akustische Überwachung zusätzlich zu der vorstehend angeführten Überwachung einer Windenergieanlage gelöst.

Die mit der Erfindung erzielten Vorteile bestehen insbesondere darin, daß eine verbesserte Fehlerfrüherkennung zur Vermeidung von Folgeschäden durchgeführt werden kann. Dies kann beispielsweise zur Erkennung von losen Schraubenverbindungen, von elektrischen Fehlern im Generatorbereich, beim Wechselrichter oder beim Transformator und von Verschleiß oder Eisansatz an den Rotorblättern im Frühstadium führen.

Zur akustischen Überwachung von Windenergieanlagen wird erfindungsgemäß zunächst ein Referenz-Geräuschspektrum einer Anlage oder Teile davon aufgenommen und gespeichert. Das Betriebs-Geräuschspektrum kann während des Betriebes kontinuierlich oder wiederkehrend aufgenommen und mit dem gespeicherten Referenzspektrum verglichen und Abweichungen zwischen diesen beiden Spektren können erfaßt werden. Anstatt ein Referenz-Geräuschspektrum einer Windenergieanlage aufzunehmen, kann auch auf ein bereits gespeichertes Referenzgeräuschspektrum einer Windkraftanlage zurückgegriffen werden.

Gemäß einer vorteilhaften Ausführungsform der Erfindung werden die erfaßten Abweichungen zwischen dem Betriebs- und Referenz-Geräuschspektrum an eine Fernüberwachungszentrale übermittelt, um zentral analysiert zu werden.

Vorteilhafterweise können ebenso die ursprünglichen, von einem Schallaufnehmer aufgenommenen Geräusche, die die Abweichung zwischen dem Betriebs- und dem Referenzspektrum hervorgerufen haben, an die Fernüberwachungszentrale übermittelt, damit das Bedienpersonal der Zentrale die Geräusche durch Hören selbst überprüfen kann.

Hierbei ist es besonders vorteilhaft, aus den ursprünglichen Geräuschen ein Geräuschmuster zu bilden und wiederum aus diesen Geräuschmustern eine akustische Datenbank aufzubauen.

Sind die Abweichungen zwischen dem Betriebs- und dem Referenzspektrum größer als ein vorgegebener Schwellwert, so wird die Windenergieanlage gegebenenfalls abgeschaltet.

Nachfolgend wird ein Ausführungsbeispiel der Erfindung beschrieben.

Erfindungsgemäß wird bei einem Probebetrieb einer Windenergieanlage jeweils ein typisches Referenz-Geräuschspektrum bzw. Referenz-Geräuschprofil der Windenergieanlage für bestimmte Betriebsbereiche wie beispielsweise Teillast oder Nennlast aufgezeichnet und in einem Datenspeicher gespeichert. Bei baugleichen Windenergieanlagen ist es ebenfalls möglich, ein bereits gespeichertes ReferenzGeräuschspektrum zu verwenden, anstatt ein spezielles Referenz-Geräuschspektrum der Anlage aufzunehmen. Zur Aufnahme des Geräuschspektrums sind mehrere Aufstellorte von Schallaufnehmern in der Windenergieanlage möglich. Beispielsweise können die Rotorblätter, der Generator bzw. der Antriebsstrang und die Elektronik überwacht werden. Zur Überwachung der Rotorblätter wird ein Schallaufnehmer beispielsweise außen am Turm, zur Überwachung des Generators und des Antriebsstranges wird ein Schallaufnehmer in der Gondel und zur Überwachung der Elektronik wird ein Schallaufnehmer im Turmfuß bzw. in der Trafostation angebracht. Die Aufstellpositionen der Schallaufnehmer sollten zwischen der Aufnahme des Referenz-Geräuschspektrums und des Betriebs-Geräuschspektrums nicht verändert werden.

Beim Betrieb der Windenergieanlage wird der jeweilige Schall (beispielsweise als Frequenzspektrum von 0,1 Hz bis 30 KHz) in Abhängigkeit von dem Betriebspunkt bzw. Arbeitsbereich wie beispielsweise von 0 KW bis zur Nennleistung aufgenommen. Dieser Betriebsschall wird mit dem Referenz-Geräuschspektrum verglichen und ausgewertet.

Bei der Erfassung des Betriebs-Geräuschspektrums wird zuerst der Arbeitsbereich bzw. der Betriebsbereich der Windenergieanlage bestimmt, um das Betriebs-Geräuschspektrum des jeweiligen Bereiches mit dem entsprechenden Referenz-Geräuschspektrum zu vergleichen. Treten dabei Abweichungen auf, die einen vorbestimmten Schwellwert überschreiten, erfolgt eine Fehlermeldung, die zur Fernüberwachungszentrale gemeldet wird, und gegebenenfalls ein manuelles (durch die Zentrale) oder automatisches Abschalten der Windenergieanlage.

Bei der Erfassung einer den Schwellwert überschreitenden Abweichung zwischen dem Betriebs- und dem Referenz-Geräuschspektrum wird, wie vorstehend beschrieben, eine Fehlermeldung an eine Fernüberwachungszentrale übermittelt. In der Fernüberwachungszentrale kann eine genaue Analyse der Fehlermeldung bzw. der Abweichungen erfolgen. Das Bedienpersonal der Fernüberwachungszentrale kann gegebenenfalls schnell auf eine Fehlermeldung reagieren und diese Fehlermeldung an das Wartungspersonal vor Ort übermitteln. So kann eine Fehlerfrüherkennung rechtzeitig erfolgen und derartige Fehler können durch das War tungspersonal schnell behoben werden. Des weiteren können dadurch Folgeschäden vermieden werden. Durch eine derartige Verbesserung der Wartung und Instandhaltung der Windenergieanlage kann die durchschnittliche Verfügbarkeit der Anlage und somit die Wirtschaftlichkeit der Anlage erhöht werden.

Zur Verbesserung der Fehlerdiagnose kann das durch einen Schallaufnehmer aufgenommene ursprüngliche Geräusch, das die Abweichung zwischen dem Betriebs- und dem Referenzspektrum verursacht hat, an die Fernüberwachungszentrale übermittelt werden. Dort kann sich das Bedienpersonal die in Frage kommenden Geräusche differenzierter anhören und gegebenenfalls Maßnahmen ergreifen. Eine derartige Vorgehensweise ist wünschenswert, da das menschliche Ohr empfindlicher und selektiver auf bestimmte Geräusche reagiert als eine Signalverarbeitungseinrichtung.

Zur Entlastung des Bedienpersonals der Fernüberwachungszentrale können aus den ursprünglichen Geräuschen (Audiosignalen) Geräuschmuster gebildet sowie aus diesen Mustern eine akustische Datenbank aufgebaut werden. Eine Signalverarbeitungseinrichtung vergleicht die aufgenommenen Geräusche einer Windenergieanlage mit den gespeicherten Geräuschmustem und trifft bereits eine Vorauswahl der möglichen Fehlerursachen. Beispielsweise können die aufgenommenen Audiosignale digitalisiert und in Geräuschmuster umgewandelt und dann digital weiterverarbeitet werden. Das Bedienpersonal der Fernüberwachungszentrale kann sich somit das Geräusch anhören und hat dabei bereits mögliche, von der Signalverarbeitungseinrichtung vorgeschlagene Fehlerursachen zur Hand. Diese Vorgehensweise kann zu einer Verbesserung und Entlastung des Arbeitsplatzes für das Bedienpersonal der Fernüberwachungszentrale führen und die Überwachung effizienter gestalten.

Außerdem ist es möglich, durch Aufbau einer Datenbank, in der alle Abweichungen zwischen dem Betriebs- und dem Referenz-Geräuschspektrum zeitlich gespeichert sind, Erkenntnisse über die Ursache und den zeitlichen Verlauf eines Fehlers zu gewinnen. Außerdem können die Daten dieser Datenbank mit Daten der anderen Betriebsparameter wie beispielsweise Windgeschwindigkeit, Temperatur, Strom, Spannung, etc. verglichen werden. Aus dem Vergleich dieser Daten kann möglicherweise eine Korrelation bei der Fehlerentwicklung gefunden werden. Derartige Hinweise wären für die Entwicklungsabteilung sehr wertvoll, da diese Erkenntnisse bei der Entwicklung neuer Anlagen und bei der Weiterentwicklung bestehender Anlagen eingebracht werden können.

## Patentansprüche

1. Verfahren zur akustischen Überwachung von Windenergieanlagen, mit den Schritten:
Speichern eines Referenz-Geräuschspektrums einer Windenergieanlage und/oder Teile davon in einer Speichereinrichtung,
Aufnehmen des Betriebs-Geräuschspektrums während des Betriebs an wenigstens einer bestimmten Stelle der Anlage,
Vergleichen des aufgenommen Betriebs-Geräuschspektrums mit dem gespeicherten Referenzspektrum, und
Erfassen von Abweichungen zwischen dem Betriebs-Geräuschspektrum und dem Raferenzspektrum,
**gekennzeichnet durch** die weiteren Schritte:
Übermitteln einer Fehlermeldung an eine Femüberwachungszentrate bei Erfassung einer einen vorbestimmten Schwellwert überschreitenden Abweichung zwischen dem Betriebs- und dem Referenz-Geräuschspektrum,
Übermittlung der erfaßten Abweichungen zwischen dem Betriebs-Geräuschspektrum und dem Referenzspektrum an die Femüberwachungszentrale,
und Übermittlung der Geräusche, die die Abweichungen zwischen dem Betriebs- und dem Referenzspektrum verursacht haben, an die Fernüberwachungszentrale.

2. Verfahren zur akustischen Überwachung von Windenergieanlagen nach Anspruch 1, weiter umfassend den Schritt:
Aufnehmen des Referenz-Geräuschspektrums einer Windenergieanlage und/oder Teilen davon an der/den bestimmten Stellen der Anlage.

3. Verfahren nach Anspruch 1 oder 2, wobei
das Betriebs-Geräuschspektrum kontinuierlich oder wiederkehrend während des Betriebs an der/den bestimmten Stelle/n der Anlage aufgenommen wird.

4. Verfahren nach Anspruch 1, 2 oder 3, wobei
aus den ursprünglichen Geräuschen Geräuschmuster gebildet und daraus eine akustische Datenbank aufgebaut werden.

5. Verfahren nach Anspruch 1 oder 2, wobei
die Windenergieanlage abgeschaltet wird, wenn die Abweichungen zwischen Betriebsspektrum und Referenzspektrum den vorgegebenen Schwellwert überschreiten.

6. Windkraftanlage, in dem das in den Ansprüchen 1-5 dargelegte Verfahren zur akustischen Überwachung angewandt wird, mit
zumindest einem Schallaufnehmer an zumindest einer bestimmten Stelle der Anlage dazu eingerichtet zum einmaligen Aufnehmen des Referenz-Geräuschspektrums und zum kontinuierlichen Aufnehmen des Betriebs-Geräuschspektrums der Windenergieanlage und/oder Teile davon,
einer Speichereinrichtung zum Speichern des Referenzspektrums der Anlage, und
einer Datenverarbeitungseinrichtung dazu eingerichtet zum Vergleichen des aufgenommenen Betriebs-Geräuschspektrums mit dem gespeicherten Referenzspektrum und zum Erfassen von Abweichungen zwischen dem Betriebs-Geräuschspektrum und dem Referenzspektrum,
**gekennzeichnet durch** eine Übermittlungsvorrichtung eingerichtet zur Übermittlung einer Fehlermeldung an eine Fernüberwachungszentrale bei Erfassung einer einen vorbestimmten Schwellwert überschreitenden Abweichung zwischen dem Betriebs- und dem Referenz-Geräuschspektrum.
Übermittlung der erfaßten Abweichungen zwischen dem Betriebs-Geräuschspektrum und dem Referenzspektrum an eine Fernüberwachungszentrale,
und Übermittlung der Geräusche, die die Abweichungen zwischen dem Betriebs- und dem Referenzspektrum verursacht haben, an die Fernüberwachungszentrale.

## Claims

1. A method for acoustically monitoring wind power installations, comprising the steps of:
storing a reference noise spectrum of a wind power installation and/or parts thereof in a storage device,
recording the operating noise spectrum during operation at at least one given location of the installation,
comparing the recorded operating noise spectrum with the stored reference spectrum, and
detecting deviations between the operating noise spectrum and the reference spectrum,
**characterised by** the further steps of:
communicating an error message to a remote monitoring centre on detection of a deviation between operating noise spectrum and reference noise spectrum exceeding a predefined threshold value,
communicating the detected deviations between operating noise spectrum and reference spectrum to the remote monitoring centre,
and communicating the noises that have caused the deviations between operating spectrum and reference spectrum to the remote monitoring centre.

2. A method for acoustically monitoring wind power installations according to claim 1, further comprising the step of:
recording the reference noise spectrum of a wind power installation and/or parts thereof at the given location(s) of the installation.

3. A method according to claim 1 or 2, wherein
the operating noise spectrum is recorded at the given location(s) of the installation continuously or recurrently during operation.

4. A method according to claim 1, 2 or 3, wherein
noise patterns are formed from the original noises and an acoustic database is compiled from those noise patterns.

5. A method according to claim 1 or 2, wherein
the wind power installation is shut down if the deviations between operating spectrum and reference spectrum exceed the predefined threshold value.

6. A wind power installation in which the acoustic monitoring method set forth in claims 1 to 5 is applied, comprising
at least one sound pick-up at at least one given location of the installation, configured for single recording of the reference noise spectrum and for continuous recording of the operating noise spectrum of the wind power installation and/or parts thereof,
a storage device for storing the reference spectrum of the installation, and
a data-processing device configured to compare the recorded operating noise spectrum with the stored reference spectrum and to detect deviations between the operating noise spectrum and the reference spectrum,
**characterised by** a communication device configured to communicate an error message to a remote monitoring centre on detection of a deviation between operating noise spectrum and reference noise spectrum exceeding a predefined threshold value,
communicate the detected deviations between operating noise spectrum and reference spectrum to a remote monitoring centre,
and communicate the noises that have caused the deviations between operating spectrum and reference spectrum to the remote monitoring centre.

## Revendications

1. Procédé de surveillance acoustique d'installations d'énergie éolienne, avec les étapes suivantes:
stockage d'un spectre du bruit de référence d'une installation d'énergie éolienne et/ou de parties de celle-ci dans un dispositif de stockage;
enregistrement du spectre du bruit en fonctionnement pendant le fonctionnement en au moins un point précis de l'installation;
comparaison du spectre du bruit en fonctionnement enregistré avec le spectre de référence stocké, et
détection des différences entre le spectre du bruit en fonctionnement et le spectre de référence,
**caractérisé par** les nouvelles étapes suivantes:
transmission d'un message d'erreur à une centrale de télésurveillance dans le cas d'une détection d'une différence dépassant positivement une valeur de seuil prédéterminée, entre le spectre du bruit en fonctionnement et celui de référence,
transmission des différences détectées entre le spectre du bruit en fonctionnement et le spectre de référence à la centrale de télésurveillance, et
transmission des bruits ayant causé les différences entre le spectre de service et celui de référence, à la centrale de télésurveillance.

2. Procédé de surveillance acoustique d'installations d'énergie éolienne selon la revendication 1, comprenant en outre l'étape suivante:
enregistrement du spectre du bruit de référence d'une installation d'énergie éolienne et/ou de parties de celle-ci sur le/les point/s précis de l'installation.

3. Procédé selon la revendication 1 ou 2, dans lequel
le spectre du bruit en fonctionnement est enregistré en continu ou de manière récurrente pendant le fonctionnement sur le/les point/s précis de l'installation.

4. Procédé selon la revendication 1, 2 ou 3, dans lequel:
un échantillon de bruit est formé à partir des bruits originaux et qu'il en est constituée une banque de données acoustiques.

5. Procédé selon la revendication 1 ou 2, dans lequel:
l'installation d'énergie éolienne se coupe quand les différences entre le spectre de service et le spectre de référence dépassent positivement la valeur de seuil prédéterminée.

6. centrale éolienne dans laquelle le procédé de surveillance acoustique présenté aux revendications 1 à 5 est mis en oeuvre, avec
au moins un enregistreur de bruit sur au moins un point précis de l'installation destiné à l'enregistrement unique du spectre du bruit de référence et à l'enregistrement en continu du spectre du bruit en fonctionnement de l'installation d'énergie éolienne et/ou de parties de celle-ci,
un dispositif de stockage pour le stockage du spectre de référence de l'installation, et
un dispositif de traitement des données servant à la comparaison du spectre du bruit en fonctionnement enregistré avec le spectre de référence stocké et à la détection des différences entre le spectre du bruit en fonctionnement et le spectre de référence,
**caractérisée par** un dispositif de transmission servant à la transmission d'un message d'erreur à une centrale de télésurveillance lors de la détection d'une différence dépassant positivement une valeur de seuil prédéterminée entre le spectre du bruit en fonctionnement et celui de référence,
transmission des différences détectées entre le spectre du bruit en fonctionnement et le spectre de référence à une centrale de télésurveillance,
et transmission des bruits ayant causé les différences entre le spectre de service et celui de référence, à la centrale de télésurveillance.
